# EUROPEAN PATENT APPLICATION

(11) **EP 4 554 084 A1**
(43) Date of publication of application: **14.05.2025**
(21) Application number: 23209144.7
(22) Date of filing: 10.11.2023
(51) Int. Cl.: H02P 27/08, H02M 3/155, H02M 7/5395

(54) **MOTOR DRIVE SYSTEM AND CORRESPONDING METHOD**

(71) Applicant: Infineon Technologies Austria AG, 9500 Villach (AT)
(72) Inventor: CHAKRABORTY, Debjani, 570016 Karnataka (IN); CHENDAKE, Vedant Sadashiv, 417397 Singapore (SG)
(74) Representative: Infineon Patent Department

(57) **Abstract**

A motor drive system is presented. The motor drive system may be configured to output a first, a second, and a third drive signal for driving an electric motor. The motor drive system may comprise a first power converter configured to generate the first drive signal, and a second power converter configured to generate the second drive signal. The motor drive system may comprise a third power converter configured to generate the third drive signal. Some or all of the power converters may be implemented as synchronous buck power converters.

## Description

### Technical field

The present document relates to motor drive systems for electric motors. In particular, the present document relates to a motor drive system for brushless direct current (BLDC) motors like e.g. permanent magnet synchronous motors (PMSMs).

### Background

Field oriented motor control is a popular choice in applications where low torque ripple is desired, contrary to 6-step commutation method used in BLDC drives. Also, in inverter-based motor drives, the phase current ripple is inversely proportional to the pulse width modulation (PWM) switching frequency. The phase current ripple contributes to motor losses, which reduce the efficiency of the motor and increase the temperature of the motor. For precision servo drives, which require high position accuracy, a torque ripple can have a negative impact on statics position accuracy. The motor phase-current ripple must be reduced to reduce the torque ripple for a given motor, which can be achieved by increasing the inverter PWM switching frequency. However, higher switching frequency results in higher switching losses in the MOSFET based inverter drives. To minimize switching losses at higher frequency, the GaN based motor drives are used. The higher switching frequency provides a significantly reduced current ripple leading to lower RMS current, thus less heating of the winding and higher motor efficiency. However, GaN based motor drives can contribute high dv/dt, and thus, it introduces a lots of design efforts. Also, higher dv/dt are not good for motor hence additional filtering circuitry is needed before its fed to the motor terminal. In a conventional motor drive system, an inverter is used to drive the motor, the power transfer from source to motor is controlled by controlling the duty cycle of MOSFETs/IGBTs/switches via switching. In a brushless DC (BLDC) motor, usually 16-20kHz switching frequency is used to drive the switches in the inverter. In this conventional method higher switching losses bring down the overall system efficiency, even the motor terminals observe the switched voltage which contributes to higher DC bus current ripples, also acoustic noise in the motor. To control power and speed, the duty cycle is controlled within the MOSFETs of the inverter, thus switching is required in the conventional method, but those switching introduces the above-mentioned consequences and higher torque ripple. One way of reducing torque ripple is to increase the switching frequency that's where GaN is a popular choice.

In the following description, limitations with current GaN based motor drives are discussed. Firstly, faster switching with GaN in inverter requires fast control loop which requires mid/high range MCU with specific set of peripherals such as high resolution PWM and fast ADC which increases the cost. Secondly, faster switching with GaN brings more challenges to the inverter design as it can bring lot of issues related to EMI, ringing, high dv/dt, etc. Thirdly, GaN switches at high switching frequency generates higher voltage gradients dv/dt which - if connected directly to the motor terminals - can result in winding damage and cause noise issues. And fourthly, higher voltage gradients dv/dt can deteriorate the winding insulation hence they need to be avoided. High frequency switching with GaN can generate higher dv/dt and can easily cross the permissible range, therefore generally, additional LCR EMI output filters may be needed which increase the cost of the solution.

It is an object of the present to overcome the above-mentioned problems by providing a novel motor drive system. For example, it is an object to eliminate high dv/dt switched pulse voltage into the motor terminals. It is desirable that the motor terminals do not observe any switching harmonics.

### Summary

According to an aspect, a motor drive system is presented. The motor drive system may be configured to output a first, a second, and a third drive signal for driving an electric motor. The motor drive system may comprise a first power converter configured to generate the first drive signal, and a second power converter configured to generate the second drive signal. The motor drive system may comprise a third power converter configured to generate the third drive signal.

The first, second, and third power converter may be connected in parallel between a first supply terminal and a second supply terminal of a power source. In other words, if three power converters are implemented, the motor drive system may emulate a B6 inverter system.

As an alternative, the motor drive system may only comprise the first and the second power converter. Instead of the third power converter, the motor drive system may comprise a third leg which may be connected between the first supply terminal and the second supply terminal of the power source. The third leg may comprise capacitors, and the third drive signal may be provided at a mid-point of this third leg. Thus, with only two true power converters, the motor drive system may emulate a B4 inverter system as a cost optimized system solution with reduced number of circuit components (such as e.g. switches and inductors).

The power converters may be DC/DC power converters. The power converters may be of the same topology. In general, the power converters may be based on any sort of isolated or non-isolated topology. For example, the power converters may be based on a non-isolated topology such as e.g. a buck, a boost, a buck-boost, a Ćuk, a SEPIC, or a switched capacitor topology. Alternatively, the power converters may be based on an isolated topology such as e.g. the flyback topology or any sort of resonant topology (such as e.g. LLC topologies).

The electric motor may be e.g. a brushless direct current (BLDC) motor. Specifically, the electric motor may be a permanent magnet synchronous motor (PMSM). Some functions of the motor drive system may be implemented in hardware, some functions may be implemented in software.

The power converters may be switched mode power supplies SMPSs, and switches of the SMPSs may be implemented using gallium nitride GaN technology. Some or all switches of the SMPSs may be implemented using GaN technology. Said switches which are implemented using GaN technology may be switched at a switching frequency of 1 MHz or more.

In particular, the power converters may be synchronous buck power converters. Each synchronous buck power converter may comprise a high side switching element coupled between a first input of the synchronous buck power converter and a switching node. Each synchronous buck power converter may comprise a low side switching element coupled between the switching node and a second input of the synchronous buck power converter. Each synchronous buck power converter may comprise an inductor coupled between the switching node and an output of the synchronous buck power converter.

As already mentioned in the foregoing description, the first, second, and third power converter may be connected in parallel between a first supply terminal and a second supply terminal of a power source. To this end, the first inputs of each synchronous buck power converter may be coupled to said first supply terminal, and the second inputs of each synchronous buck power converter may be coupled to said second supply terminal.

The switching elements may be implemented with any suitable devices, such as, for example, metal-oxide-semiconductor field effect transistors MOSFETs, insulated-gate bipolar transistors IGBTs, MOS-gated thyristors, or any other suitable power devices. Some or all of the switching elements may be implemented using GaN technology. Specifically, switching elements may be implemented using a III-V compound semiconductor material for implementing e.g. GaN- high-electron-mobility transistors HEMTs. Each switching element may have a gate to which a respective driving voltage/current or control signal may be applied to turn the switching element on (i.e. to close the switching element) or to turn the switching element off (i.e. to open the switching element). Without loss of generality, it is preferable that the switching elements of the synchronous buck power converter may be implemented using GaN technology and that they may be switched at a relatively high frequency such as e.g. 1MHz.

Each synchronous buck power converters may comprise an output capacitor coupled between the output of the synchronous buck power converter and the second input of the respective synchronous buck power converter.

At the output of the first synchronous buck power converter, the first drive signal may be provided. At the output of the second synchronous buck power converter, the second drive signal may be provided. At the output of the third synchronous buck power converter, the third drive signal may be provided.

Each power converter may also be implemented using a multilevel topology. For instance, the power converters may be synchronous multi-level buck power converters comprising an additional high side switching element (which may be coupled between the first input and the high side switching element), an additional low side switching element (which may be coupled between the low side switching element and the second input), and a flying capacitor. The flying capacitor may be coupled between a first node (located between the additional high side switching element and the high side switching element) and a second node (located between the additional low side switching element and the low side switching element).

The first drive signal, the second drive signal, and the third drive signal may have continuous, periodic shape and are phase-shifted by 120 degrees with regard to each other. To be more specific, each drive signal may have the shape of a sine waveform with third harmonics superposed.

The motor drive system may be configured to output the first drive signal at a first output node and to output the second drive signal at a second output node, and a voltage between the first output node and the second output node may have sinusoidal shape. Here, a sinusoidal shape means a shape which resembles (maybe with minor deviations) a sine waveform. The motor drive system may be configured to output the third drive signal at a third output node. A voltage between the first output node and the third output node may have sinusoidal shape, and a voltage between the second output node and the third output node may have sinusoidal shape.

The first, second, and third drive voltage may be directly connected to the three phase terminals of the electric motor. In this way, high frequency switching at the phase terminals is avoided. Instead, smooth and continuous drive signals generated by the three power converters may be directly applied to the phase terminals of the electric motor. Unlike prior art solutions, there may be no inverter circuit which is directly connected to said phase terminals.

The first drive signal, the second drive signal, and the third drive signal may be periodically oscillating signals whose instantaneous frequency corresponds to an instantaneous rotation frequency of the electric motor. In other words, the oscillations of the drive signals may be synchronized (if applicable with a lead angle or a lag angle as will be described later) with the rotations of the electric motor (or the rotations of the rotor to be more specific).

The motor drive system may be configured to generate the first, second, and third drive signal for controlling a desired speed or a desired torque of the electric motor.

The first power converter may be configured to generate the first drive signal based on a first voltage reference and a sensed output voltage at an output of the first power converter. Similarly, the second power converter may be configured to generate the second drive signal based on a second voltage reference and a sensed output voltage at an output of the second power converter. The third power converter may be configured to generate the third drive signal based on a third voltage reference and a sensed output voltage at an output of the third power converter. In general, the functionality of the second and third power converter may be similar or identical to the functionality of the first power converter, and repetitive description will be omitted in the following description.

The first power converter may be configured to compare the first voltage reference with the sensed output voltage e.g. using a comparator circuit. Alternatively or additionally, the first power converter may be configured to determine a difference between the first voltage reference and the sensed output voltage. The first power converter may comprise a proportional-integral PI controller. The first power converter may also comprise a pulse-width-modulation PWM generator for generating switching signals for controlling the switches of the first power converter.

The motor drive system may comprise a voltage sensing unit configured to determine the sensed output voltage based on a voltage at the output of the first power converter. Similarly, the voltage sensing unit may be configured to sense output voltages at the outputs of the second and third power converter, respectively.

The motor drive system may be configured to determine the first voltage reference based on rotor position information of the electric motor. Analogously, the motor drive system may be configured to determine the second voltage reference and the third voltage reference based on rotor position information of the electric motor. The motor drive system may comprise a rotor position determination unit configured to determine the rotor position information of the electric motor. For example, the rotor position information of the electric motor may be determined with the help of hall sensors, wherein the hall sensors may or may not be part of the claimed rotor position determination unit. Or, the rotor position determination unit may be configured to determine the rotor position information of the electric motor in a sensorless manner based on back electromotive force (BEMF) information or another observer model. For example, the rotor position information may comprise a rotor angle or sector information, i.e., information identifying a current sector out of a total number of sectors in which the rotor may be located in.

The motor drive system may be configured to determine a first angle reference, a second angle reference, and a third angle reference based on the rotor position information, and the first, second, and third angle reference may be periodic signals which are phase-shifted by 120 degrees. The motor drive system may be configured to determine the first angle reference, the second angle reference, and the third angle reference based on space-vector-modulation SVM theory.

The motor drive system may be configured to determine the first voltage reference by multiplying an initial voltage reference with the first angle reference. The motor drive system may be configured to determine the second voltage reference by multiplying the initial voltage reference with the second angle reference. The motor drive system may be configured to determine the third voltage reference by multiplying the initial voltage reference with the third angle reference.

In voltage mode control, the initial voltage reference may be a user-defined value which is fed to the three power converters. Alternatively, in torque mode control, the initial voltage reference may be determined based on a torque reference and a sensed motor current. For instance, the motor drive system may comprise a current sensor for determining the sensed motor current. The motor drive system may also comprise a torque PI controller for determining the initial voltage reference in torque mode control.

In conclusion, the proposed solution may eliminate high dv/dt switched pulse voltage into the motor terminals. Thus, the motor terminals may not observe any switching harmonics and system efficiency is improved, thus higher output power is delivered. By using three synchronous buck converters comprising of GaN switches, scalar control may be implemented in a-b-c (each individual phase) domain, thus the computation load on MCU may be reduced compared to the conventional high switching frequency drives. But at the same time, we can achieve similar/better performance of GaN based conventional inverters.

According to another aspect, a method of driving an electric motor is presented. The method may comprise steps corresponding to the functional features of the motor drive system described throughout this document. The method may comprise generating, by a first power converter, a first drive signal, and generating, by a second power converter, a second drive signal. The method may comprise generating, by a third power converter, a third drive signal. The first, second, and third power converter may be switched mode power supplies SMPSs, and switches of the SMPSs may be implemented using gallium nitride GaN technology. The power converters may be synchronous buck power converters. Each synchronous buck power converter may comprise a high side switching element coupled between a first input of the synchronous buck power converter and a switching node, a low side switching element coupled between the switching node and a second input of the synchronous buck power converter, and an inductor coupled between the switching node and an output of the synchronous buck power converter. The first drive signal, the second drive signal, and the third drive signal may have continuous, periodic shape and may be phase-shifted by 120 degrees with regard to each other.

The method may comprise outputting, by the motor drive system, the first drive signal at a first output node and to output the second drive signal at a second output node, and a voltage between the first output node and the second output node may have sinusoidal shape.

The first drive signal, the second drive signal, and the third drive signal may be periodically oscillating signals whose instantaneous frequency corresponds to an instantaneous rotation frequency of the electric motor.

The method may comprise generating, by the motor drive system, the first, second, and third drive signal for controlling a desired speed or a desired torque of the electric motor. The method may comprise generating, by the first power converter, the first drive signal based on a first voltage reference and a sensed output voltage at an output of the first power converter. The method may comprise determining the first voltage reference based on rotor position information of the electric motor. The method may comprise determining a first angle reference, a second angle reference, and a third angle reference based on the rotor position information, wherein the first, second, and third angle reference may be periodic signals which are phase-shifted by 120 degrees. The method may comprise determining the first voltage reference by multiplying an initial voltage reference with the first angle reference.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

In the present document, the term "couple" or "coupled" refers to elements being in electrical communication with each other, whether directly connected e.g., via wires, or indirectly connected via other circuit elements between them. For example, two elements may be said to be coupled even if there is a circuit element such as a switch (which may be turned on and off) in between them. On the other hand, the term "connect" or "connected" refers to elements being directly electrically connected with each other, e.g. via wires, and no circuit elements are located between them.

### Short description of the figures

The present invention is illustrated by way of example, and not by way of limitation, in the figures in which like reference numerals refer to similar or identical elements, and in which
Fig. 1 shows two example motor drives according to the invention,
Fig. 2 shows a more detailed view of one example motor drive,
Fig. 3 shows a yet more detailed view of one example motor drive,
Fig. 4 shows an exemplary implementation of a PI controller using a comparator operational amplifier,
Fig. 5 shows an alternative implementation of the voltage reference for the voltage regulators using transformations,
Fig. 6 shows simulation results for voltage mode control,
Fig. 7 shows further simulation results for voltage mode control,
Fig. 8 shows yet further simulation results for voltage mode control,
Fig. 9 shows simulation results for a ramp load change in voltage mode control, and
Fig. 10 shows further simulation results for a ramp load change in voltage mode control.

### Detailed Description

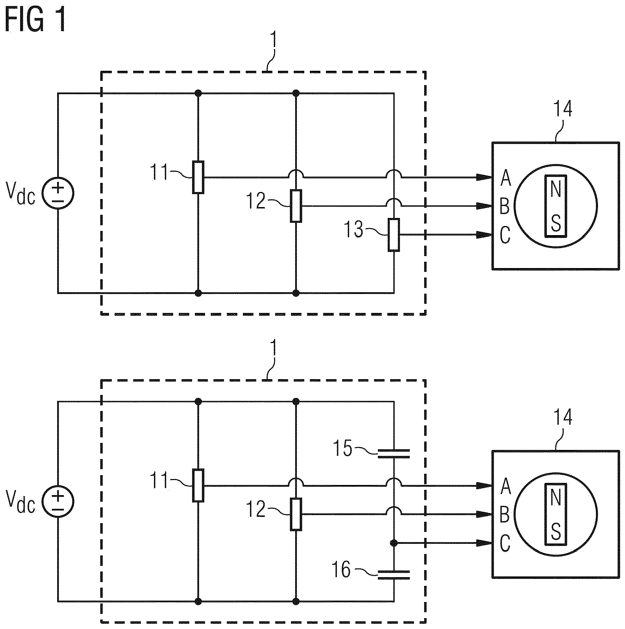

Fig. 1 shows two example motor drives according to the invention. In the top half of Fig. 1, a first exemplary motor drive system 1 is illustrated. The motor drive system 1 outputs a first, a second, and a third drive signal for driving an electric motor 14. The phase terminals of the electric motor 14 are denoted as A, B, and C, respectively. The motor drive system 1 comprises a first power converter 11 configured to generate the first drive signal, and a second power converter 12 configured to generate the second drive signal. Moreover, the motor drive system 1 comprises a third power converter 13 configured to generate the third drive signal.

In the bottom half of Fig. 1, a second exemplary motor drive system 1 with only two power converters 11 and 12 is shown. The third leg of the motor drive system may comprise capacitors 15 and 16, and the third drive signal may be provided at a mid-point of this third leg.

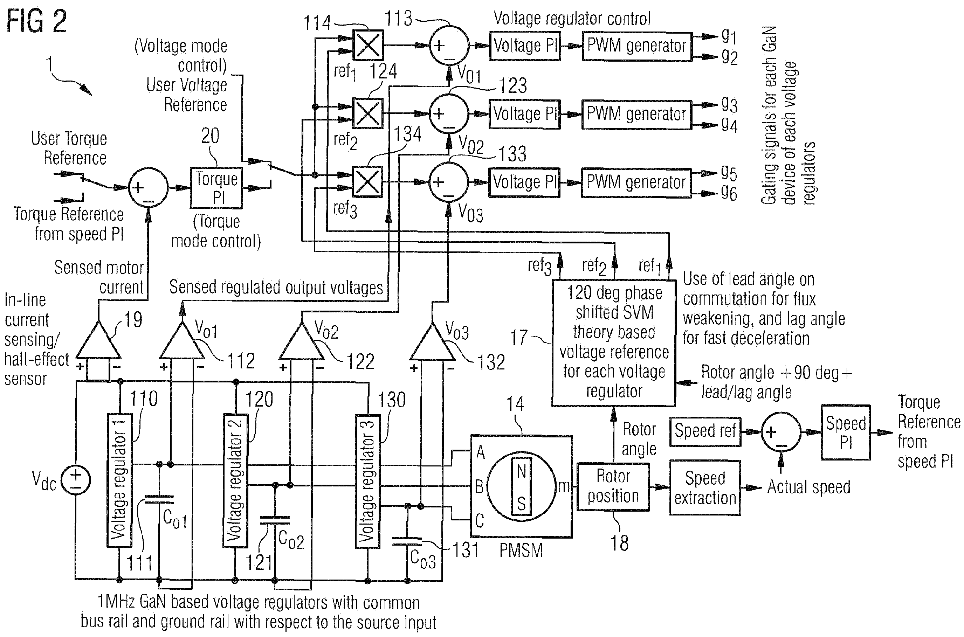

Fig. 2 shows a more detailed view of one example motor drive 1. As a matter of fact, everything shown in Fig. 2 except of the electric motor 14 may form part of the inventive motor drive system 1.

The motor drive system 1 comprises voltage regulators 110, 120, 130 for implementing the respective power converters. At the output of each voltage regulator, the output voltage across an output capacitor 111, 121, 131 is sensed using sensing circuit 112, 122, 132. At nodes 113, 123, 133, the sensed output voltages are subtracted from respective voltage references. Subsequently, voltage PI controllers and PWM generators generate the switching signal for controlling the switches of the voltage regulators 110, 120, 130.

The motor drive system determines the voltage reference by multiplying (at nodes 114, 124, 134) initial voltage references with angle references refi, ref₂, and ref₃ generated at angle reference generation module 17. Rotor position determination unit 18 determines a rotor angle (rotor position information) and provides this information to the angle reference generation module 17.

In voltage mode control, the initial voltage reference may be a user-defined value (denoted as user voltage reference in Fig. 2) which is fed to the three power converters. Alternatively, in torque mode control, the initial voltage reference may be determined based on a torque reference and a sensed motor current. For instance, the motor drive system may comprise a current sensor 19 for determining the sensed motor current. The motor drive system may also comprise a torque PI controller 20 for determining the initial voltage reference in torque mode control.

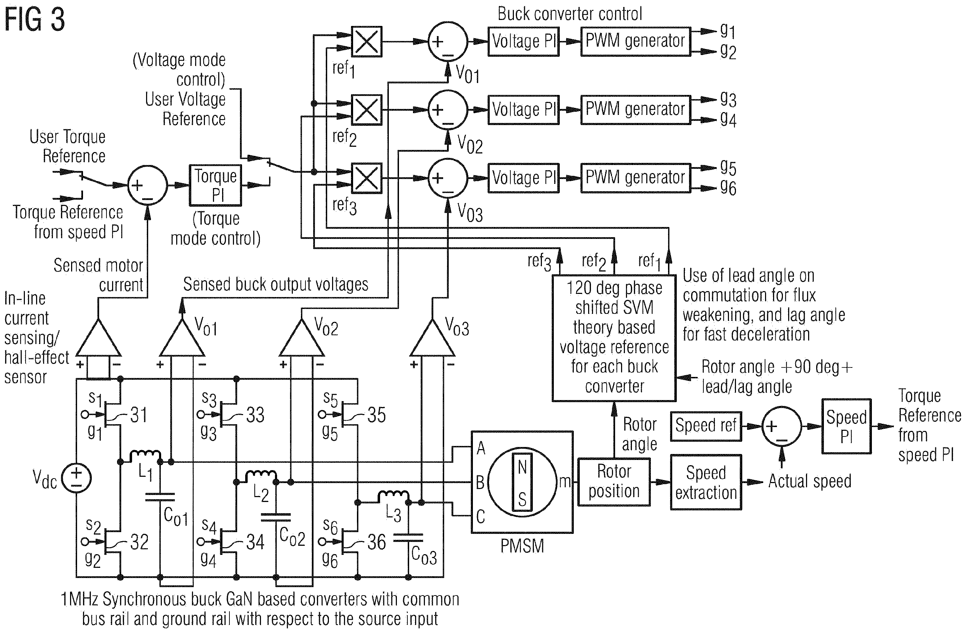

Fig. 3 shows a yet more detailed view of one example motor drive. In contrast to Fig. 2, Fig. 3 shows the single switches 31 to 36 for the exemplary implementation as a synchronous buck converter.

The proposed solution eliminates high frequency switching at the motor terminals by using three synchronous GaN based buck converters, connected in parallel at the source port, and each output DC voltage from each of the synchronous buck converters is connected to the respective three phase terminals of the motor as shown in Fig. 3. Each of these three synchronous buck converters produce 120-degree phase shifted SVM theory based sinusoidal output voltage signal with the third harmonic component such that when these outputs are connected to the three phase motor terminals, each phase-phase terminal voltage is a pure sinusoidal voltage waveform. Thus, without any switching, the desired voltage waveform is applied at the motor phase terminals. The buck converters are comprised of GaN devices, are switched at very high switching frequency therefore the required inductances and output capacitances are low. Thus, a smooth ripple free output waveform can be constructed out of these GaN based synchronous buck converters, and high frequency switching is eliminated at the motor terminals. The speed of the motor may be controlled by controlling the output voltage of the buck converters, and torque output to motor may be controlled by controlling the duty of the buck converters to provide the required current. The rotor angle information may be required to generate the SVM theory-based voltage references for buck converters, which can be extracted from the hall signals. Alternatively, in sensorless control it can be determined based on the BEMF estimator/PLL estimator. Here we are controlling the voltage to the PMSM motor directly instead of the duty to the inverter switches, that's how we are avoiding the PWM switching at the motor terminals. However, the power transfer is controlled by the buck converter. The concept of controlling duty to transfer power or regulate speed is replaced here by, changing voltage output of the buck converter to regulate to the required speed.

Each synchronous buck converter composes of two GaN devices (as shown in Fig. 3) switched at high switching frequency (example, 1MHz) operating in voltage mode control. The voltage reference for the buck converter can be user voltage reference (voltage mode control) or from voltage reference from torque PI controller (torque mode control). The speed loop generates the torque reference for the torque PI controller. Current limit can be applied by sensing in-line dc input current, also using it as torque reference. The rotor angle information is fed into the SVM block to calculate the three 120 deg phase shifted references which when multiplied with generated voltage reference from either torque mode control or voltage mode control is fed to each of the three buck converters as voltage reference for its control and thus generate the three 120 deg phase shifted gating for the GaN switches. The SVM block can also use a phase angle lead/lag for flux weakening or boosting operation.

The output voltage nodes of these synchronous buck converters are directly connected to the three phase terminals of the PMSM motor. Compared to conventional VSI, this architecture is different because here the GaN switches are switched at high switching frequencies (similar like conventional VSI), however the motor terminal is not connected to these device terminals, the motor terminals are connected at each output nodes of the buck converters. Each buck converter follows the 120 deg phase shifted reference (from SVM block multiplied by voltage PI or torque PI output) and thus the motor terminals observe a smooth sinusoidal voltage at fundamental frequency (speed of the motor).

Since the buck converter is driven at a very high switching frequency using GaN devices, the required buck inductor is very small, thus this makes this solution design very compact and can be used for drones/cordless power tools or can be placed directly on the motor. Also, with the use of GaN devices at 1MHz or more the size of required bus capacitance also reduces significantly. Since its basic buck converter control, it can be easily implemented and at very high switching frequencies even with low end controllers. For applications requiring higher inrush current, a bulk capacitance can be used at the input to reduce the voltage ripple on the source/battery. This ripple has no effect on the torque ripple, the torque ripple depends on the size of the output capacitance at the buck converter which is small because of high frequency switching operation. A diode can be connected at the source to prevent current going back into source, if the application has such requirements. Else the bidirectional power flow can be utilized to support regenerative braking of motor and supplement battery in reverse (boost direction).

In summary, the proposed solution eliminates high frequency switching at the motor terminals but instead controls the voltage to the inverter smoothly which results in less ripple in DC bus current and thus the system level efficiency increases. Also, doesn't need high control loop bandwidth for motor control, hence the CPU load can be significantly reduced.

The advantages of the proposed type of motor drives according to the claims may be summarized as follows:
- No high switching frequency is injected into the motor terminals.
- Very low dv/dt at motor terminals hence ringing, EMI or torque ripple issues can be easily eliminated.
- Doesn't require additional filter circuits to limit high dv/dt hence overall cost is reduced.
- No need of mid/high end MCU as control loop frequency can be kept lower. MCU doesn't need any specialized peripheral set such as high resolution PWM or fast ADC to drive the motor hence solution cost gets optimized.
- Fast dynamic response compared to CSI as voltage is controlled directly.
- Multiple transformations are eliminated using scalar control therefore computational load on MCU is significantly lower compared to conventional implementation of FOC.
- Compared to conventional VSI, the DC bulk capacitance can be lower in this architecture because torque ripple is not dependent on this capacitance rather depends on the buck capacitance which is low due to high switching frequency operation.
- From the motor end only rotor angle information is required in sensored control. Voltage sensing is required only at the buck regulator side and in-line current sensing at the DC input side. There is no requirement of stator current sensing in this architecture. The buck inductor current is directly connected to the stator winding therefore all three stator currents is available without any need of shunt resistors.
- Typically, buck converter has limitation in generation 100% output voltage, and limited by duty in producing the minimum voltage. Therefore, the speed range on the high and low end can be extended further by using angle advance/lag in the SVM block, which also has a positive impact on deceleration (fast deceleration with a lag angle).

The proposed concept can be implemented with three synchronous GaN based buck converters (connected to a source in parallel) plus MCU to control the converter and the motor as shown in Fig.3. An alternative to the buck converter topology can be any other voltage regulator topology.

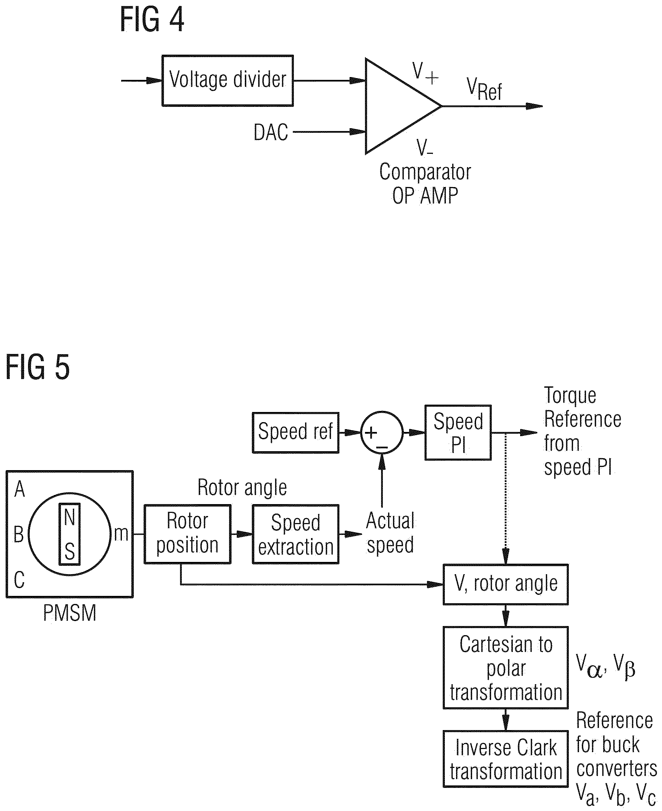

It is also possible and much easier to implement the buck converter's PI voltage and current control by just using comparator OPAMPs to reduce computation load on MCU, and thus also reduce the cost of MCU. Fig. 4 shows an exemplary implementation of a PI controller using a comparator operational amplifier.

In the conventional method of field-oriented control (vector control), high end MCUs are required to perform multiple transformations (Clarke transform, park transform, inverse Clarke and park transforms), which limits its application usage. Using the proposed idea, we are avoiding multiple transformations to reduce computation burden on MCU, using scalar control. However, an alternate way of generating 120 deg phases shifted reference (i.e. the first, second, and third angle references) for buck converters is using transformations as shown in Fig. 5. Fig. 5 shows an alternative implementation of the voltage reference for the voltage regulators using transformations (i.e. vector control).

Currently because of a buck regulator the speed range may be at maximum at 95-97% of input voltage to minimum at 1.5-2% of input voltage. To achieve higher speed, with a buck converter highest speed is less than 100% due to the losses in the buck converter and the practical limitations of the buck converter. To achieve the rated motor speed, we can use angle advance feature (lead angle-flux weakening). To overcome the buck minimum voltage output which restricts the minimum speed achievable, we can introduce angle advance feature (lag angle) to make a decrement (flux boost) in the control signal. The same feature can also be used to make faster deceleration.

The fundamental idea behind the proposed method is to eliminate fast switching and hence high dv/dt fed directly into the motor terminals and implement field-oriented control in a simplified way avoiding multiple transformations, i.e. scalar control. The proposed solution gets rid of the switching source at the motor terminals. SVM theory-based voltage reference is fed to three 120-degree phase shifted synchronous buck converters comprised of GaN devices, to produce a sinusoidal voltage output between the motor phase terminals, thus torque ripples are negligible due to the field-oriented control. Only rotor angle sensing is required to provide voltage reference to the buck regulators and for angle advancing to enable field weakening/ field boosting (for fast deceleration/slow speed operation). The rotor angle can be extracted from hall signals or using PLL estimators/back EMF estimators in sensorless control. FOC is implemented by controlling each phase voltage using the buck regulators, it is also possible to eliminate the need of multiple transformations by using scalar control, which simplifies the computations for MCU. The motor terminals observe a clean voltage at its terminals and observes only the fundamental frequency which comes from the speed of the motor. The buck converters can be regulated from full maximum duty to the minimum duty which can be used to control speed/torque range for the motor. However, we can also extend the high-speed range and also the low-speed range by using angle advance/lag feature independent of the buck converter limitations.

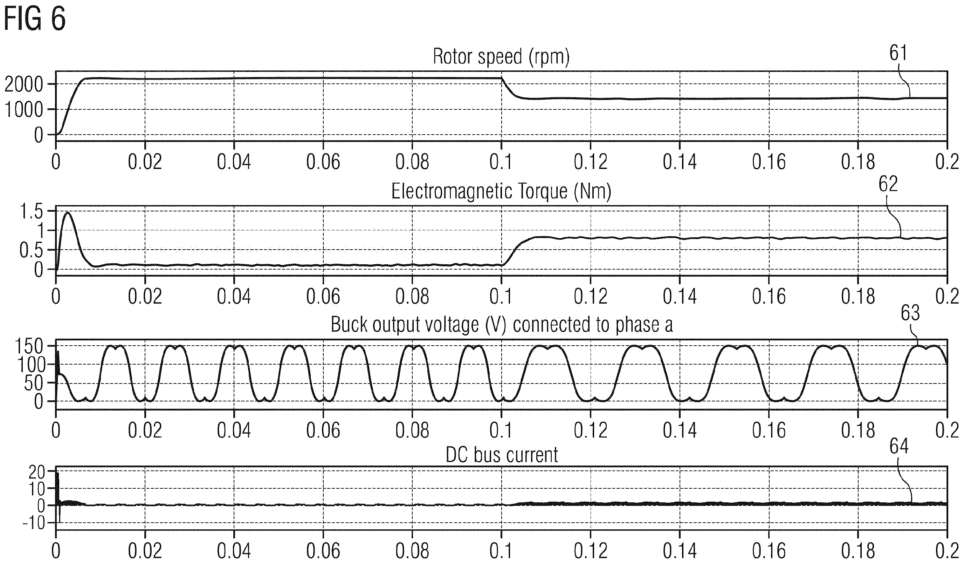

Fig. 6 shows simulation results for voltage mode control for a topology according to Fig. 3. Fig. 6 shows the rotor speed 61, the electromagnetic torque 62, the buck output voltage 63 of phase A (i.e. the voltage across capacitors 111), and the DC bus current (which corresponds to the current sensed by current sensor 19 in Figs. 2 and 3). To be more specific, Fig. 6 shows the response of motor speed 61, torque 62, and buck converter output voltage 63 and DC bus current 64 to a load step change 0.1Nm to 0.8Nm at 0.1s. After the load step, the pulse width of the M-shaped, sinusoidal pulses increases while the pulse frequency decreases.

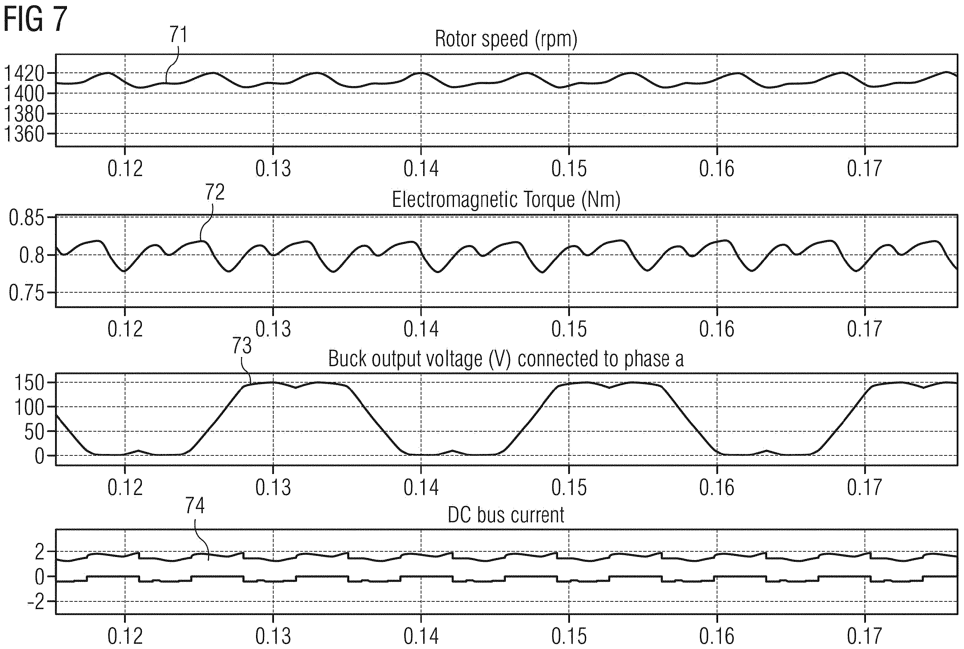

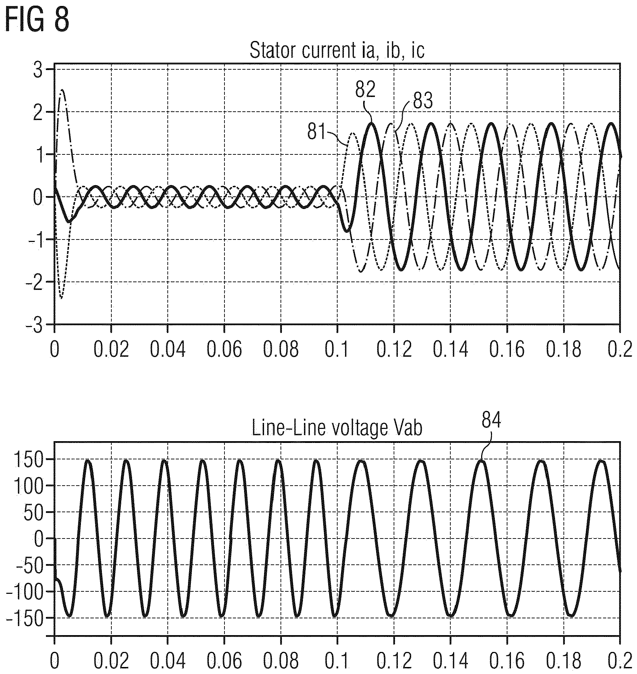

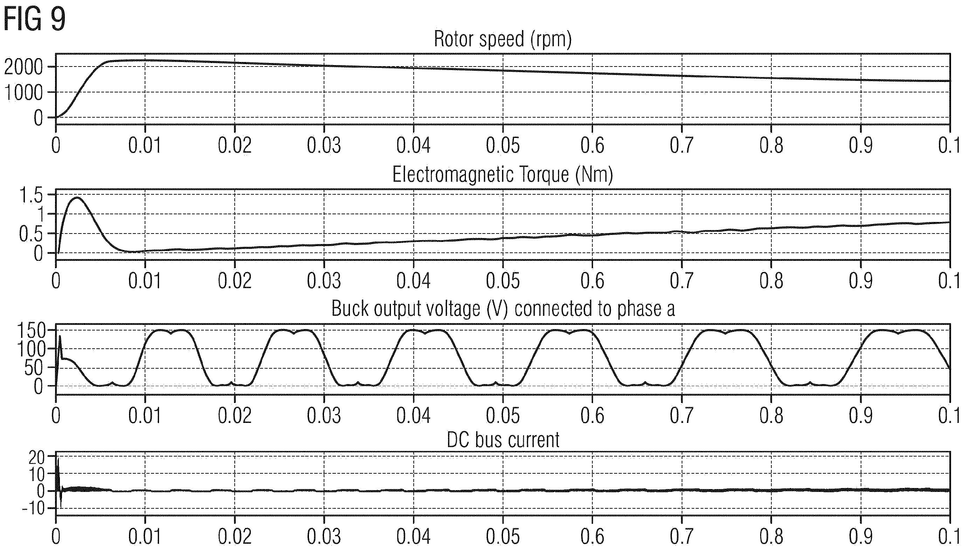

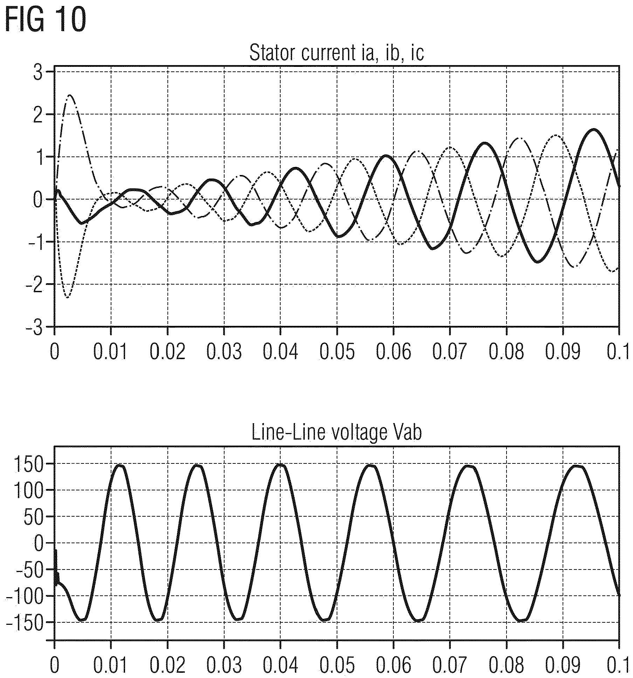

Fig. 7 shows simulation results for voltage mode control. In particular, Fig. 7 shows the same rotor speed 71, electromagnetic torque 72, buck output voltage 73, and DC bus current 74 as in Fig. 6, but zoomed in during the time interval between 0.12s and 0.17s. Thus, it becomes evident that the DC bus current 74 oscillates/ripples between the upper and lower bounds illustrated in Fig. 7 (and reference numeral 74 actually indicates the area between both bounds). Fig. 8 shows the stator currents (into phase terminals A, B, and C of motor 14), which are denoted as 81, 82, and 83 in Fig. 8. Also shown is the difference voltage between terminal A and terminal B of motor 14, which is denoted as line-line voltage Vab 84 in Fig. 8. Figs. 9 and 10 show the behavior for a ramp load change from 0Nm to 0.8Nm in 0.1s.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A motor drive system configured to output a first, a second, and a third drive signal for driving an electric motor, the motor drive system comprising
- a first power converter configured to generate the first drive signal, and
- a second power converter configured to generate the second drive signal.

2. The motor drive system according to claim 1, comprising a third power converter configured to generate the third drive signal.

3. The motor drive system according to claim 1 or 2, wherein the power converters are switched mode power supplies SMPSs, and wherein switches of the SMPSs are implemented using gallium nitride GaN technology.

4. The motor drive system according to any one of the preceding claims, wherein the power converters are synchronous buck power converters.

5. The motor drive system according to claim 4, wherein each synchronous buck power converter comprises
- a high side switching element coupled between a first input of the synchronous buck power converter and a switching node,
- a low side switching element coupled between the switching node and a second input of the synchronous buck power converter, and
- an inductor coupled between the switching node and an output of the synchronous buck power converter.

6. The motor drive system according to any one of the preceding claims, wherein the first drive signal, the second drive signal, and the third drive signal have continuous, periodic shape and are phase-shifted by 120 degrees with regard to each other.

7. The motor drive system according to any one of the preceding claims, wherein the motor drive system configured to output the first drive signal at a first output node and to output the second drive signal at a second output node, and wherein a voltage between the first output node and the second output node has sinusoidal shape.

8. The motor drive system according to any one of the preceding claims, wherein the first drive signal, the second drive signal, and the third drive signal are periodically oscillating signals whose instantaneous frequency corresponds to an instantaneous rotation frequency of the electric motor.

9. The motor drive system according to any one of the preceding claims, wherein the motor drive system is configured to generate the first, second, and third drive signal for controlling a desired speed or a desired torque of the electric motor.

10. The motor drive system according to any one of the preceding claims, wherein the first power converter is configured to generate the first drive signal based on a first voltage reference and a sensed output voltage at an output of the first power converter.

11. The motor drive system according to claim 10, comprising a voltage sensing unit configured to determine the sensed output voltage based on a voltage at the output of the first power converter.

12. The motor drive system according to claim 10 or 11, wherein the motor drive system is configured to determine the first voltage reference based on rotor position information of the electric motor.

13. The motor drive system according to claim 12, comprising a rotor position determination unit configured to determine the rotor position information of the electric motor.

14. The motor drive system according to claim 13, wherein the motor drive system is configured to determine a first angle reference, a second angle reference, and a third angle reference based on the rotor position information, and wherein the first, second, and third angle reference are periodic signals which are phase-shifted by 120 degrees.

15. The motor drive system according to claim 14, wherein the motor drive system is configured to determine the first voltage reference by multiplying an initial voltage reference with the first angle reference.

16. A method of driving an electric motor, the method comprising
- generating, by a first power converter, a first drive signal, and
- generating, by a second power converter, a second drive signal.

## Amended claims

### Amended claims in accordance with Rule 137(2) EPC.

1. A motor drive system (1) configured to output a first, a second, and a third drive signal for driving an electric motor (14), the motor drive system (1) comprising
- a first power converter (11) configured to generate the first drive signal, and
- a second power converter (12) configured to generate the second drive signal.

2. The motor drive system (1) according to claim 1, comprising a third power converter (13) configured to generate the third drive signal.

3. The motor drive system (1) according to claim 1 or 2, wherein the power converters (11, 12, 13) are switched mode power supplies SMPSs, and wherein switches of the SMPSs are implemented using gallium nitride GaN technology.

4. The motor drive system (1) according to any one of the preceding claims, wherein the power converters (11, 12, 13) are synchronous buck power converters.

5. The motor drive system (1) according to claim 4, wherein each synchronous buck power converter comprises
- a high side switching element coupled between a first input of the synchronous buck power converter and a switching node,
- a low side switching element coupled between the switching node and a second input of the synchronous buck power converter, and
- an inductor coupled between the switching node and an output of the synchronous buck power converter.

6. The motor drive system (1) according to any one of the preceding claims, wherein the first drive signal, the second drive signal, and the third drive signal have continuous, periodic shape and are phase-shifted by 120 degrees with regard to each other.

7. The motor drive system (1) according to any one of the preceding claims, wherein the motor drive system (1) configured to output the first drive signal at a first output node (113) and to output the second drive signal at a second output node (123), and wherein a voltage between the first output node (113) and the second output node (123) has sinusoidal shape.

8. The motor drive system (1) according to any one of the preceding claims, wherein the first drive signal, the second drive signal, and the third drive signal are periodically oscillating signals whose instantaneous frequency corresponds to an instantaneous rotation frequency of the electric motor (14).

9. The motor drive system (1) according to any one of the preceding claims, wherein the motor drive system (1) is configured to generate the first, second, and third drive signal for controlling a desired speed or a desired torque of the electric motor (14).

10. The motor drive system (1) according to any one of the preceding claims, wherein the first power converter (11) is configured to generate the first drive signal based on a first voltage reference and a sensed output voltage at an output of the first power converter (11).

11. The motor drive system (1) according to claim 10, comprising a voltage sensing unit configured to determine the sensed output voltage based on a voltage at the output of the first power converter (11).

12. The motor drive system (1) according to claim 10 or 11, wherein the motor drive system (1) is configured to determine the first voltage reference based on rotor position information of the electric motor (14).

13. The motor drive system (1) according to claim 12, comprising a rotor position determination unit (18) configured to determine the rotor position information of the electric motor (14).

14. The motor drive system (1) according to claim 13, wherein the motor drive system (1) is configured to determine a first angle reference (ref1), a second angle reference (ref1), and a third angle reference (ref3) based on the rotor position information, and wherein the first, second, and third angle reference (ref1, ref2, ref3) are periodic signals which are phase-shifted by 120 degrees.

15. The motor drive system (1) according to claim 14, wherein the motor drive system (1) is configured to determine the first voltage reference by multiplying an initial voltage reference with the first angle reference (ref1).

16. A method of driving an electric motor (14) using a motor drive system (1) according to any of the preceding claims 1 to 14, the method comprising
- generating, by the first power converter (11), a first drive signal, and
- generating, by the second power converter (12), a second drive signal.
